# EUROPÄISCHE PATENTSCHRIFT

(11) **EP 0 796 164 B1**
(45) Veröffentlichungstag und Bekanntmachung des Hinweises auf die Patenterteilung: **23.02.2000**
(21) Anmeldenummer: 95936584.2
(22) Anmeldetag: 02.11.1995
(51) Int. Cl.: B24B 3/02, B23Q 16/00

(54) **VERFAHREN UND VORRICHTUNG ZUM NACHSCHLEIFEN VON GENUTETEN WERKZEUGEN**
METHOD AND DEVICE FOR REGRINDING GROOVED TOOLS
PROCEDE ET DISPOSITIF POUR LE REAFFUTAGE D'OUTILS RAINURES

(30) Priorität: 05.12.1994 DE 4443213
(43) Veröffentlichungstag der Anmeldung: 24.09.1997
(73) Patentinhaber: Junker, Erwin, D-77787 Nordrach (DE)
(72) Erfinder: Junker, Erwin, D-77787 Nordrach (DE)
(74) Vertreter: Leske, Thomas, Dr.
(86) Internationale Anmeldenummer: EP9504304
(87) Internationale Veröffentlichungsnummer: WO9617710

(56) Entgegenhaltungen:
- FR-A- 1 455 182
- US-A- 1 694 074
- US-A- 3 675 372

## Beschreibung

Die Erfindung betrifft ein Verfahren und eine Vorrichtung zum Nachschleifen von gerade- und spiralgenuteten Werkzeugen mit Hilfe eines Positionierkopfes, der mit zwei Taststiften versehen ist.

Zum Nachschleifen von gerade- und spiralgenuteten Werkzeugen gibt es, wie dem Fachmann allgemein bekannt ist, generell zwei Möglichkeiten:

Zum einen wird eine Maschine mit numerischer Steuerung der einzelnen Achsbewegungen eingesetzt. Diese Maschinen haben vergleichsweise hohe Anschaffungskosten und sind für größere Stückzahlen gut geeignet, aber die genaue Geometrie des nachzuschärfenden Werkzeugs muß bekannt sein oder vor dem Nachschleifen des genuteten Werkzeugs vermessen werden, damit diese Meßwerte in die Steuerung übernommen werden können.

Eine weitere Möglichkeit des Nachschärfens von genuteten Werkzeugen besteht darin, eine manuell gesteuerte Nachschärfmaschine zu verwenden, die einen günstigen Anschaffungspreis hat und auch für kleine Stückzahlen geeignet ist. Zum Nachschleifen des z.B. sprialgenuteten Werkzeugs wird dieses an seinem Schaftende eingespannt. Dies kann durch ein Spannfutter, eine Spannzange, einen Aufnahmekonus oder eine Pinole erfolgen. Die Pinole wird manuell in Vorschubrichtung verschoben. Die WZ-Geometrie in bezug auf die Spiralnutsteigung muß dabei nicht bekannt sein, weil eine Zwangsführung des nachzuschleifenden Werkzeugs durch einen Taststift erfolgt. Dieser greift während des Schleifvorganges in eine Spiralnut des nachzuschleifenden Werkzeugs ein, deren Steigung der Steigung der nachzuschleifenden Kontur entspricht. Da das Schleifwerkzeug (Schleifscheibe) zum Einlaufen in die zu schleifende Zone am nachzuschleifenden Werkzeug bereits eine exakte Führung durch den Taststift erfordert, ist dieser um ein bestimmtes Maß in Vorschubrichtung vor der Schleifscheibe angeordnet. Dieses durch Vorauseilen des Taststiftes vor der Schleifscheibenmitte befindet sich der Taststift schon vr der Schleifscheibe im Auslaufbereich der Spiralnut. Sobald der Tastfinger den Bereich des voll ausgebildeten Nutenprofils verläßt, muß der Schleifvorgang beendet werden, da ansonsten die nachgeschliffene Kontur entweder verzerrt ist oder da nachzuschleifende Werkzeug verschliffen und damit unbrauchbar wird. Ein ähnlicher Effekt tritt dann ein, wenn bei einer ins Freie auslaufenden Nut der Taststift diese Nut verläßt. Bei diesem bekannten Verfahren kann das nachzuschleifende Profil am nachzuschleifenden Werkzeug nicht über seine ganze Länge nachgeschliffen werden.

Der FR-A-1 455 182 ist als bekannt zu entnehmen, daß für das Nachschleifen eines Werkzeugs ein Positionierkopf mit zwei Führungsstiften verwendet wird. Das Werkzeug ist dabei ein mit einzelnen Schneidwerkzeugen versehener, rotierender Messerträger, und für das formschlüssige Eingreifen der Führungsstifte sind an diesem Messerträger eigene Nuten vorgesehen.

Der Erfindung liegt die Aufgabe zugrunde, bei einer manuell gesteuerten Nachschleifmaschine das bekannte Verfahren bzw. die bekannte Vorrichtung so weiterzubilden, daß das Nachschleifen des nachzuschleifenden Profils über dessen gesamte Länge mit größter Präzision ermöglicht wird.

Diese Aufgabe wird verfahrensmäßig mit den im Anspruch 1 angegebenen Merkmalen, vorrichtungsmäßig mit den im Anspruch 4 angegebenen Merkmalen gelöst.

Entscheidend kommt es darauf an, daß mit einem der Schleifscheibe vorauslaufenden, zurückziehbaren Taststift und mit einem der Schleifscheibe nachlaufenden, fest mit dem Positionierkopf verbundenen zweiten Taststift gearbeitet wird. Dies wird dadurch ermöglicht, daß beim Schleifen des Nutenanfangs der erste zurückziehbare Taststift führt, während anschließend über eine bestimmte Nutenlänge beide Taststifte gleichzeitig führen. Nach Einlauf des zweiten Taststiftes in die Nut am nachzuschleifenden Werkzeug kann der erste Taststift zurückgezogen werden, jedoch muß er spätestens vor dem Eintritt in den Nutenauslauf zurückgezogen sein. Sobald der erste Taststift vor Eintritt in den Nutenauslauf zurückgezogen ist bzw. bei ins Freie auslaufender Nut diese verläßt, übernimmt der zweite Taststift die Führung der Pinole des Werkstückspindelkstocks. Dadurch kann z.B. die Spanbrust der Nut oder die Mantelfase am nachzuschärfenden Werkzeug über seine bzw. ihre ganze Länge nachgeschliffen werden. Die beiden Taststifte müssen sich einfach und in kurzer Zeit auf verschiedene Werkzeuggeometrien einstellen lassen.

Hier sind vor allen Dingen die verschiedenen Nutenformen, Werkzeugabmessungen und Spiralwinkel der Nuten am nachzuschleifenden Werkzeug zu berücksichtigen. Der Positionierkopf mit den beiden Taststiften ist auf einem Klemmhalter befestigt, der auf dem Schleiftisch montiert ist. Um ein möglichst einfaches und schnelles Umrüsten des Positionierkopfes für unterschiedliche Schleifaufgaben zu ermöglichen, ist der Klemmhalter derart ausgeführt, daß er mit einer zentralen Feststellschraube von Hand gelöst werden kann, und nach dem Einstellen durch diese wieder festgestellt wird.

Im gelösten Zustand sind die Gelenke des Klemmhalters frei beweglich, so daß der Positionierkopf auf die gewünschte Position einstellbar ist. Nach diesem Einstellen auf die gewünschte Position wird die Feststellschraube von Hand angezogen, und die Gelenke sind nun starr.

Vorteilhafte weitere Ausführungsformen des Verfahrens nach Anspruch 1 sind Gegenstand der Ansprüche 2 und 3, vorteilhafte weitere Ausführungsformen der Vorrichtung nach Anspruch 4 sind Gegenstand der Ansprüche 5 bis 8.

Im folgenden wird die Erfindung anhand von in der Zeichnung dargestellten Ausführungsbeispielen näher erläutert. Es zeigt:
- Fig. 1: schematisch eine erfindungsgemäß ausgebildete Vorrichtung in der Vorderansicht,
- Fig. 2: eine Seitenansicht, teilweise im Schnitt, der in Fig. 1 dargestellten Vorrichtung senkrecht zur Darstellung gemäß Fig. 1,
- Fig. 3: den Positionierkopf mit den beiden Taststiften in einer teilweise geschnittenen Vorderansicht, wobei der erste Taststift in ausgefahrener Stellung gezeigt ist,
- Fig. 4: eine Darstellung entsprechend der Fig. 3 mit zurückgezogenem Taststift,
- Fig. 5 und 6: verschiedene Bearbeitungsbeispiele.

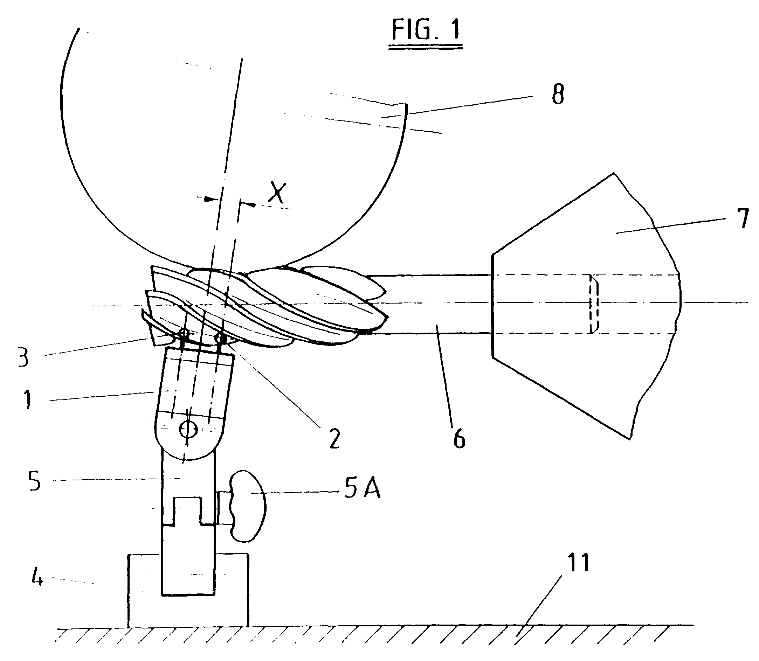

In Fig. 1 ist gezeigt, daß ein Positionierkopf 1 mit zwei Taststiften 2, 3 versehen ist. Die Positioniervorrichtung besteht aus dem Positionierkopf 1, einem Klemmhalter 5 in Form eines frei beweglichen Gelenkarms, der in beliebig eingestellter Position durch eine Feststellschraube 5A festgestellt werden kann, und einem Halter 4, mit welchem der Klemmhalter 5 auf dem Schleiftisch 11 befestigt ist. Der frei bewegliche Klemmhalter 5 der Positioniervorrichtung bietet die Möglichkeit, daß der Positionierkopf 1 mit den beiden Taststiften 2, 3 auf die abzutastende Nut am nachzuschleifenden Werkzeug 6 sehr schnell und sehr genau eingestellt werden kann. Der Schleiftisch 11 ist mit Führungen versehen für Tischlängsbewegungen, die zur Verstellung dienen, um das nachzuschleifende Werkzeug in eine entsprechende Längsposition zu bringen. Ferner ist auf dem Schleiftisch 11 ein Werkstückspindelstock montiert, der eine axial und radial sehr leicht bewegliche Pinole aufnimmt, die die Vorschubbewegung beim Schleifen ausführt. Am vorderen Ende der Pinole ist beispielsweise ein Spannzangenfutter 7 angebracht, welches zur Aufnahme des nachzuschleifenden Werkzeugs 6 dient. Hier können aber auch andere Spannelemente zum Einspannen des nachzuschleifenden Werkzeugs 6 zum Einsatz kommen. Dies hängt von der Aufnahmemöglichkeit des jeweils nachzuschleifenden Werkzeugs 6 ab. Das Nachschleifen erfolgt durch eine Schleifscheibe 8. Da beim Einlauf der Schleifscheibe 8 in das nachzuschleifende Werkzeug 6 dieses bereits radial exakt geführt sein muß, läuft der erste Taststift 2 um einen bestimmten Abstand der Schleifscheibe 8 voraus, während der zweite Taststift 3 der Schleifscheibe nachläuft. Der Vorlauf des ersten Taststifts 2 vor der Schleifscheibe 8 wird durch die Schleifgeometrie und -aufgabe bestimmt. Hier ergibt sich dann ein Maß x.

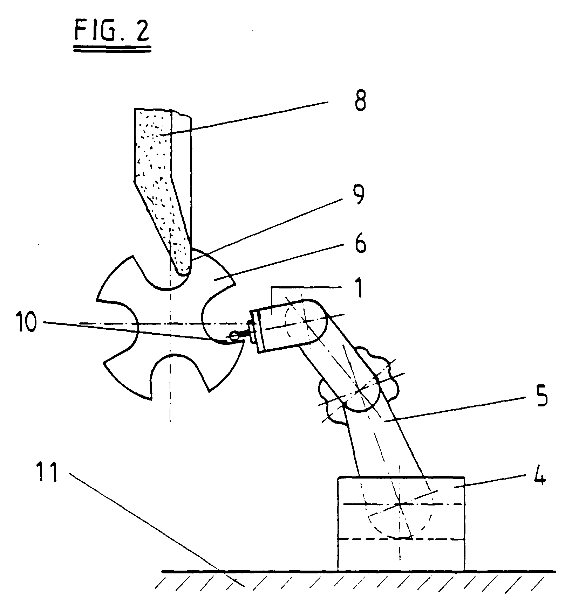

In Fig. 2 ist der Eingriff der Schleifscheibe 8 beim Nachschleifen der Spanfläche 9 eines Werkzeuges 6 dargestellt. Die Positioniervorrichtung mit den Taststiften 2 und 3 greift in eine benachbarte Nut 10 ein, deren Steigung der Steigung des nachzuschleifenden Nutenprofils bzw. der Mantelfase entspricht.

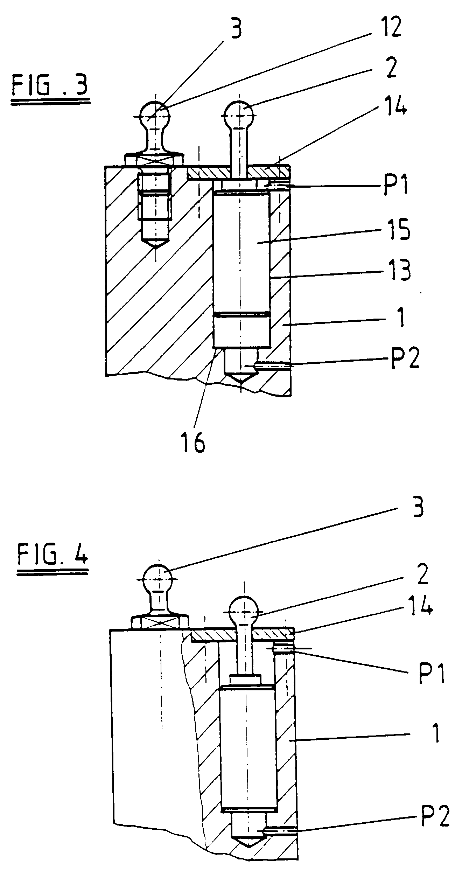

Aus den Fig. 3 und 4 ist zu ersehen, daß der Taststift 2, welcher der Schleifscheibe 8 vorausläuft, in einer zur Mittelachse des Taststiftes 3 parallelen Richtung verschiebbar ist. Der Taststift 3 ist fest mit dem Positionierkopf 1 verbunden, aber dennoch leicht austauschbar. Die beiden Taststifte 2 und 3 besitzen in ihrem Kopfbereich 12 die gleiche Geometrie. Je nach Nutenform und Schleifaufgabe ist die Gestaltung dieses Kopfbereichs 12 konstruktiv ausgelegt.

Der Taststift 2 ist so ausgeführt, daß er automatisch aus der Nut zurückziehbar ist. Dieses Ein- und Ausfahren des Taststiftes 2 im Positionierkopf 1 wird im gezeigten Beispiel pneumatisch ausgeführt, und zwar mittels der Pneumatikanschlüsse P1 und P2. Eine weitere Möglichkeit der Bewegung des Taststiftes 2 besteht darin, diesen mittels Druckfeder auszufahren und mit Pneumatik zurückzuziehen. Der zurückziehbare Taststift 2 ist im Positionierkopf 1 in einer Bohrung 13 über einen hinteren dickeren Schaftteil 15 spielfrei geführt. Die Bohrung 13 ist durch einen Verschlußdeckel 14 verschlossen, der mit dem Positionierkopf 1 verschraubt ist. Dieser dient als Längsanschlag beim Ausfahren des Taststiftes 2. Beim Zurückziehen schlägt der Taststift 2 mit seinem hinteren Ende am Bohrungsgrund 16 an.

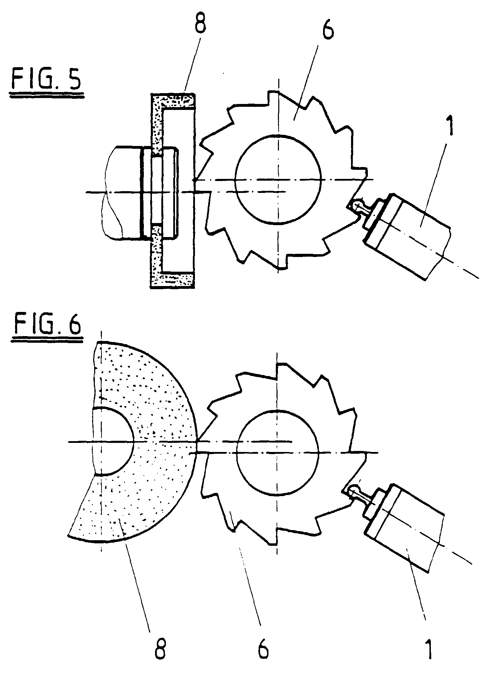

In den Fig. 5 und 6 sind einige Bearbeitungsbeispiele für den Angriff des Schleifwerkzeugs an dem nachzuschärfenden Werkzeug und für den Eingriff der Positioniervorrichtung dargestellt.

Es ist darauf hinzuweisen, daß nicht nur spiralgenutete Werkzeuge, sondern auch geradgenutete Werkzeuge mit dem Verfahren bzw. mit der Vorrichtung nach der Erfindung nachgeschärft werden können. Die beschriebene Positioniervorrichtung kann an jeder Werkzeugschleifmaschine zum Nachschleifen von Werkzeugen angebaut werden.

Eine weitere Möglichkeit zum Einsatz dieses Verfahrens bzw. dieser Vorrichtung besteht beim Nachschleifen von Werkzeugen mit nur einer Nut. Hier muß der Positionierkopf dann konstruktiv derart ausgeführt sein, daß ein Taststift sich vor der Schleifscheibe und einer sich hinter der Schleifscheibe in Vorschubrichtung befindet. Hier ist dann noch darauf zu achten, daß die beiden Taststifte an einer Stelle der Nut angeordnet werden, die nicht im Schleifbereich der Schleifscheibe liegt, ansonsten wird nach dem gleichen Prinzip verfahren, wie es vorstehend beschrieben worden ist.

## Patentansprüche

1. Verfahren zum Nachschleifen von gerade- und spiralgenuteten Werkzeugen unter Verwendung eines Positionierkopfes mit zwei Taststiften, die in eine Nut eingreifen,
**dadurch gekennzeichnet, daß**
der erste der Schleifscheibe (8) vorauslaufende Taststift (2) vor dem Eintritt in den Nutenauslauf aus der Nut zurückgezogen wird und danach der zweite, fest mit dem Positionierkopf (1) verbundene und der Schleifscheibe nachlaufende Taststift (3) die Führung der Pinole des Werkstückspindelkopfes übernimmt.

2. Verfahren nach Anspruch 1, dadurch gekennzeichnet, daß das Zurückziehen des ersten Taststifts (2) automatisch erfolgt.

3. Verfahren nach Anspruch 1 oder 2, dadurch gekennzeichnet, daß die beiden Taststifte (2, 3) in eine mit der nachzuschleifenden Nut korrespondierende Nut (10) eingreifen.

4. Vorrichtung zum Nachschleifen von gerade- und spiralgenuteten Werkzeugen nach einem der Ansprüche 1 bis 3 mit einem Positionierkopf und zwei Taststiften, dadurch gekennzeichnet, daß der erste Taststift (2) zurückziehbar im Positionierkopf (1) gelagert ist und der zweite Taststift (3) mit dem Positionierkopf (1) fest verbunden ist.

5. Vorrichtung nach Anspruch 4, dadurch gekennzeichnet, daß der erste Taststift (2) pneumatisch ausfahrbar und zurückziehbar ist.

6. Vorrichtung nach Anspruch 4, dadurch gekennzeichnet, daß der erste Taststift (2) mittels Druckfeder ausfahrbar und pneumatisch zurückziehbar ist.

7. Vorrichtung nach Anspruch 5 oder 6, dadurch gekennzeichnet, daß die Taststifte (2, 3) je nach Werkzeuggeometrie austauschbar sind.

8. Vorrichtung nach einem der Ansprüche 4 bis 7, dadurch gekennzeichnet, daß der Positionierkopf (1) an einem frei beweglichen Klemmhalter (5) befestigt ist, der nach dem Einstellen des Positionierkopfes (1) in einer bestimmten Position feststellbar ist.

## Claims

1. Method of regrinding straight- and spirally-grooved tools by using a positioning head having two sensor pins, which engage in a groove, characterised in that the first sensing pin (2), which precedes the grinding disc (8), is retracted from the groove before entering the groove outlet, and thereafter the second sensor pin (3), which is securedly connected to the positioning head (1) and follows the grinding disc, assumes the guidance of the spindle sleeve of the workpiece spindle head.

2. Method according to claim 1, characterised in that the retraction of the first sensor pin (2) is effected automatically.

3. Method according to claim 1 or 2, characterised in that the two sensor pins (2, 3) engage in a groove (10) corresponding to the groove to be reground.

4. Apparatus for regrinding straight- and spirally-grooved tools according to one of claims 1 to 3, having a positioning head and two sensor pins, characterised in that the first sensor pin (2) is retractably mounted in the positioning head (1), and the second sensor pin (3) is securedly connected to the positioning head (1).

5. Apparatus according to claim 4, characterised in that the first sensor pin (2) is pneumatically extendable and retractable.

6. Apparatus according to claim 4, characterised in that the first sensor pin (2) is extendable by means of a compression spring and pneumatically retractable.

7. Apparatus according to claim 5 or 6, characterised in that the sensor pins (2, 3) are interchangeable according to the tool geometry.

8. Apparatus according to one of claims 4 to 7, characterised in that the positioning head (1) is mounted on a freely displaceable clamping holder (5), which is securable in a specific position after the positioning head (1) is set.

## Revendications

1. Procédé de rectification par meulage d'outils pourvus d'une rainure rectiligne ou hélicoïdale, moyennant l'utilisation d'une tête de positionnement comportant deux tiges de palpage qui s'engagent dans une rainure,
caractérisé en ce que
la première tige de palpage (2), qui est en avant de la meule (8), est retirée de la rainure avant d'arriver à la sortie de rainure, et ensuite la deuxième tige de palpage (3) qui est reliée de façon fixe à la tête de positionnement (1) et est en arrière de la meule assure le guidage de la douille de la tête de broche porte-pièce.

2. Procédé selon la revendication 1, caractérisé en ce que le retrait de la première tige de palpage (2) s'effectue automatiquement.

3. Procédé selon la revendication 1 ou 2, caractérisé en ce que les deux tiges de palpage (2,3) s'engagent dans une rainure (10) qui correspond à la rainure devant être rectifiée par meulage.

4. Dispositif pour rectifier par meulage des outils comportant une rainure rectiligne et une rainure hélicoïdale selon l'une des revendications 1 à 3, comportant une tête de positionnement et deux tiges de palpage, caractérisé en ce que la première tige de palpage (2) est montée, de manière à pouvoir être rétractée, dans la tête de positionnement (1) et que la seconde tige de palpage (3) est reliée de façon fixe à la tête de positionnement (1).

5. Dispositif selon la revendication 4, caractérisé en ce que la première tige de palpage (2) peut être déployée et rétractée pneumatiquement.

6. Dispositif selon la revendication 4, caractérisé en ce que la première tige de palpage (2) peut être déployée à l'aide d'un ressort de pression et être rétractée pneumatiquement.

7. Dispositif selon la revendication 5 ou 6, caractérisé en ce que les tiges de palpage (2 et 3) sont permutables en fonction de la géométrie de l'outil.

8. Dispositif selon l'une des revendications 4 à 7, caractérisé en ce que la tête de positionnement (1) est fixée sur un support de serrage librement mobile (5), qui peut être fixé après le réglage de la tête de positionnement (1) dans une position déterminée.
